(19) Europäisches Patentamt European Patent Office Office européen des brevets

(11) **EP 2 979 146 B1**

(12) **FASCICULE DE BREVET EUROPEEN**

(45) Date de publication et mention de la délivrance du brevet:
**14.08.2019 Bulletin 2019/33**

(21) Numéro de dépôt: **14704145.3**

(22) Date de dépôt: **12.02.2014**

(51) Int Cl.:
**G05D 23/19** (2006.01)   **F24F 11/30** (2018.01)

(86) Numéro de dépôt international:
**PCT/EP2014/052725**

(87) Numéro de publication internationale:
**WO 2014/154393 (02.10.2014 Gazette 2014/40)**

(54) **DISPOSITIF DE COMMANDE POUR MACHINE DE CHAUFFAGE, VENTILATION ET CLIMATISATION**

STEUERUNGSVORRICHTUNG FÜR EINE HEIZUNGS-, LÜFTUNGS- UND KLIMAANLAGENMASCHINE

CONTROL DEVICE FOR A HEATING, VENTILATION AND AIR-CONDITIONING MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2013 FR 1352632**

(43) Date de publication de la demande:
**03.02.2016 Bulletin 2016/05**

(73) Titulaire: **Schneider Electric Industries SAS 92500 Rueil-Malmaison (FR)**

(72) Inventeurs:
• **CHICHE, Thierry**
  **F-38330 Saint Ismier (FR)**
• **LIGERET, Christophe**
  **F-92506 Rueil Malmaison Cedex (FR)**
• **JACQUEMIN, Benoît**
  **F-38330 Saint Ismier (FR)**

(74) Mandataire: **Dufresne, Thierry et al Schneider Electric Industries SAS Service Propriété Industrielle 35 rue Joseph Monier - CS 30323 92506 Rueil-Malmaison Cedex (FR)**

(56) Documents cités:
**US-A1- 2004 016 817    US-A1- 2012 273 581**

**Description**

**Domaine technique de l'invention**

La présente invention se rapporte à un dispositif de commande pour machine de chauffage, ventilation et climatisation.

**Etat de la technique**

De manière connue, un système de chauffage, ventilation et climatisation (également appelé HVAC pour "Heating, Ventilation and Air Conditioning") comporte notamment une machine de chauffage, ventilation et climatisation et un ou plusieurs capteurs de température connectés à la machine et idéalement placés pour permettre à la machine de réguler la température d'une pièce ou d'un local à une température de consigne choisie par l'utilisateur.

Aujourd'hui, il est important de pouvoir adapter sa consommation d'électricité, pour des questions de coût mais aussi pour des questions environnementales. Pour répondre à de telles problématiques, certains appareils électriques sont conçus pour adapter leur fonctionnement à une stratégie de demande/réponse (en anglais demand/response (DR)) permettant de gérer la consommation d'électricité en fonction de certains paramètres, tels que la demande globale ou les prix du marché.

Cependant, les appareils électriques déjà installés ne sont pas toujours adaptés pour répondre à cette stratégie. C'est notamment le cas des machines de chauffage, ventilation et climatisation qui consomment beaucoup d'électricité et qui ne sont pas conçues pour adapter leur fonctionnement à une stratégie de demande/réponse.

Des dispositifs de commande de système de chauffage, ventilation et climatisation sont décrits dans les documents US2004/016817A1 et US2012/273581A1.

Le but de l'invention est donc de proposer une solution simple permettant à une machine de chauffage, ventilation et climatisation déjà installée de fonctionner selon une stratégie de demande/réponse et ainsi d'adapter le mode de fonctionnement de la machine en fonction de différentes contraintes.

**Exposé de l'invention**

Ce but est atteint par un dispositif de commande pour machine de chauffage, ventilation et climatisation, ladite machine de chauffage, ventilation et climatisation comprenant une unité de contrôle-commande ayant une première entrée recevant une valeur de température de consigne, une deuxième entrée recevant un signal d'entrée et au moins une sortie sur laquelle est appliqué un signal de commande déterminé par l'unité de contrôle-commande en fonction du signal d'entrée et de la valeur de température de consigne, le dispositif de commande comportant un microcontrôleur comprenant :

-   au moins une entrée destinée à se connecter à un capteur de température afin de recevoir du capteur de température au moins une valeur de température mesurée et une sortie destinée à se connecter à l'entrée de l'unité de contrôle-commande, ledit microcontrôleur étant agencé pour déterminer une valeur de température fictive à appliquer sur la deuxième entrée de l'unité de contrôle-commande en fonction de la valeur de température mesurée par le capteur de température afin que l'unité de contrôle-commande de la machine génère un signal de commande forçant le déclenchement d'un mode de fonctionnement particulier de la machine.

Le microcontrôleur comporte un module d'auto-apprentissage agencé pour déterminer les températures fictives à appliquer et un module de correction des températures comprenant des résistances variables dont les valeurs sont ajustées en fonction de la température fictive à appliquer.

Avantageusement, le microcontrôleur comporte un module de contrôle agencé pour gérer les demandes de déclenchement d'un mode de fonctionnement particulier de la machine et pour commander le module de correction des températures.

Selon une particularité, le module de correction des températures comporte :

-   deux bornes d'entrée, dites première borne d'entrée et deuxième borne d'entrée, destinées à se connecter en parallèle du capteur de température,
-   deux bornes de sortie, dites première borne de sortie et deuxième borne de sortie, destinées à se connecter sur la deuxième entrée de l'unité de contrôle-commande de la machine,
-   une première résistance variable connectée d'une part à la première borne d'entrée et d'autre part à la première borne de sortie,
-   une deuxième résistance variable connectée d'une part à la première borne de sortie et d'autre part à la deuxième borne d'entrée et à la deuxième borne de sortie,

- une unité de commande reliée au module de contrôle et agencée pour faire varier les valeurs des deux résistances afin de répondre aux demandes de déclenchement provenant du module de contrôle.

Selon une autre particularité, le module de correction des températures comporte des moyens de détermination du type de capteur de température employé.

Selon une autre particularité, le mode de fonctionnement forcé est choisi parmi la mise en veille de la machine et la mise en marche à pleine puissance de la machine.

L'invention concerne également un système de chauffage, ventilation et climatisation comprenant :

- une machine de chauffage, ventilation et climatisation comprenant une unité de contrôle-commande ayant une première entrée recevant une valeur de température de consigne, une deuxième entrée recevant un signal d'entrée et au moins une sortie sur laquelle est appliqué un signal de commande déterminé par l'unité de contrôle-commande en fonction du signal d'entrée et de la valeur de température de consigne,
- au moins un capteur de température destiné à mesurer une température, ledit système comportant :
un dispositif de commande tel que défini ci-dessus, une entrée du microcontrôleur du dispositif étant connectée au capteur de température afin de recevoir du capteur de température au moins une valeur de température mesurée et une sortie du microcontrôleur étant connectée à la deuxième entrée de l'unité de contrôle-commande, ledit dispositif de commande étant agencé pour déterminer une valeur de température fictive à appliquer sur la deuxième entrée de l'unité de contrôle-commande en fonction de la valeur de température mesurée par le capteur de température afin que l'unité de contrôle-commande de la machine génère un signal de commande forçant le déclenchement d'un mode de fonctionnement particulier de la machine.

**Brève description des figures**

D'autres caractéristiques et avantages vont apparaître dans la description détaillée qui suit faite en regard des dessins annexés dans lesquels :

- la figure 1 représente, de manière schématique, le système de chauffage, climatisation et ventilation de l'invention,

- la figure 2 représente de manière schématique le principe de correction de température employé dans le dispositif de commande de l'invention.

**Description détaillée d'au moins un mode de réalisation**

L'invention concerne un dispositif de commande 1 destiné à être associé à une machine 2 de chauffage, ventilation, climatisation et réfrigération (également appelée HVAC) et permettant de contrôler différents modes de fonctionnement de la machine, notamment pour répondre à une stratégie de modulation de la consommation ("demand/response") et ainsi d'adapter le fonctionnement de la machine à différentes contraintes.

Le dispositif 1 de commande de l'invention présente l'avantage de pouvoir s'adapter à une machine 2 de chauffage, ventilation et climatisation existante, sans modifier la régulation effectuée par la machine et sans modifier le circuit frigorifique de la machine.

Le dispositif 1 de commande de l'invention est agencé pour forcer un mode de fonctionnement de la machine. Le dispositif 1 de commande permet ainsi de commander la mise en veille de la machine ou la mise en marche à pleine puissance de la machine.

Classiquement, une machine 2 de chauffage, ventilation et climatisation comporte une unité de contrôle-commande 20 dotée d'une ou plusieurs entrées in1, in2, chaque entrée in1, in2 étant destinée à être connectée à un capteur de température T1, T2 distinct. L'unité de contrôle-commande 20 comporte également une entrée in_Tcons recevant une température de consigne Tcons, par exemple définie par un utilisateur ou par un automate programmable, et une sortie out sur laquelle est appliqué un signal de commande déterminé à partir de la température de consigne, des valeurs de température reçues en entrée et de l'exécution d'une boucle de régulation. Le signal de commande appliqué sur la sortie out de l'unité de contrôle-commande est envoyé aux différents actionneurs de la machine 2 en vue d'atteindre la température de consigne Tcons appliquée en entrée.

Dans la suite de la description, on considérera un système comprenant deux capteurs de température T1, T2. Bien entendu, l'invention peut fonctionner en employant un seul capteur de température. Le premier capteur de température T1 est par exemple agencé pour mesurer la température du fluide caloporteur en entrée de l'échangeur thermique de la machine et le deuxième capteur de température est agencé pour mesurer la température en sortie de l'échangeur thermique de la machine.

Le dispositif 1 de commande de l'invention vient s'intercaler entre les capteurs de température T1, T2 et les entrées in1, in2 normalement allouées à ces capteurs sur l'unité de contrôle-commande 20 de la machine 2.

Le dispositif 1 de commande comporte ainsi un microcontrôleur comprenant deux entrées in_T1, in_T2 connectées aux deux capteurs de température T1, T2 et deux sorties out_T1, out_T2 connectées aux deux entrées in1, in2 de l'unité de contrôle-commande 20 de la machine 2, ces deux entrées in1, in2 étant normalement allouées à recevoir directement les valeurs de température mesurées par les capteurs de température T1, T2.

Le dispositif 1 de commande reçoit donc des capteurs de température T1, T2 les valeurs de température mesurées par les capteurs. A partir de ces valeurs, le microcontrôleur du dispositif 1 de commande détermine des valeurs fictives T1_sim, T2_sim de température à appliquer sur les entrées de l'unité de contrôle-commande afin de forcer un mode de fonctionnement de la machine 2. Autrement dit, le dispositif 1 de commande de l'invention permet de leurrer l'unité de contrôle-commande 20 de la machine 2 et est agencé pour faire croire à l'unité de contrôle-commande 20 qu'une température est atteinte alors que cette température ne l'est pas.

L'application d'une valeur fictive T1_sim, T2_sim de température à la machine 2 permet de forcer un mode de fonctionnement particulier de la machine. Préférentiellement, les modes de fonctionnement forcés sont la mise en veille de la machine 2 et la mise en marche à pleine puissance de la machine 2.

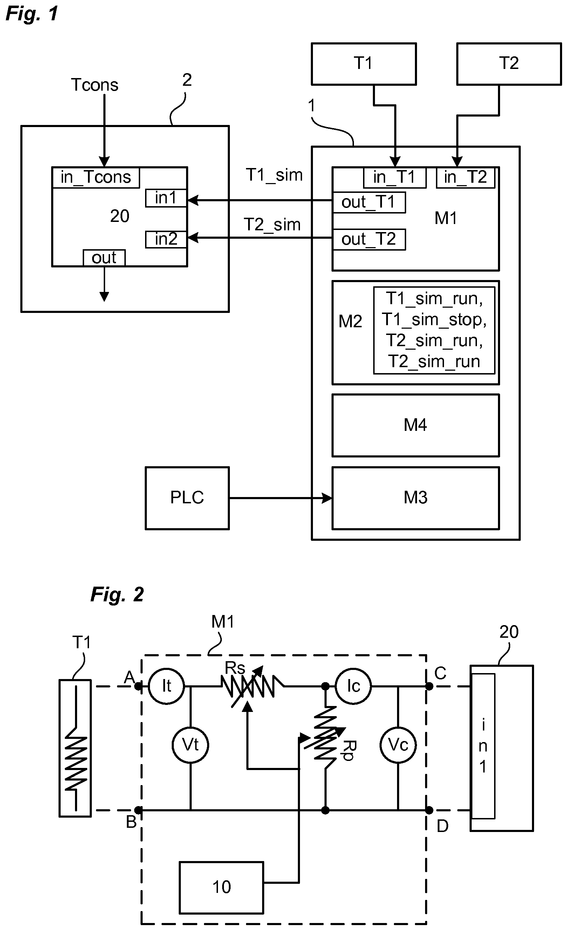

En référence à la figure 1, le microcontrôleur du dispositif de commande de l'invention comporte ainsi :

- un module M1 de correction des températures à appliquer sur les entrées de l'unité de contrôle-commande de la machine. Si les capteurs de température sont de type résistif, ce module M1 s'appuie sur des résistances variables dont les valeurs sont adaptées pour corriger la valeur vue en entrée par la machine. Ce module sera décrit ci-après.

- un module M2 d'auto-apprentissage agencé pour déterminer les valeurs fictives T1_sim, T2_sim de température à appliquer en entrée sur la machine 2 pour forcer la mise en veille ou la mise en marche à pleine puissance de la machine. Dans un système à deux capteurs de température, le module d'auto-apprentissage détermine donc les valeurs T1_sim_stop et T2_sim_stop correspondant aux valeurs permettant, de manière indépendante, de forcer la mise en veille de la machine. Le module M2 d'auto-apprentissage détermine également les valeurs T1_sim_run et T2_sim_run correspondant aux valeurs permettant, de manière indépendante, de forcer la mise en marche à pleine puissance de la machine. Le microcontrôleur du dispositif de commande comporte des moyens de mémorisation permettant de mémoriser les différentes températures à appliquer pour forcer un mode de fonctionnement de la machine 2.

- un module M3 de contrôle agencé pour recevoir, par exemple d'un automate programmable PLC, les demandes de mise en veille ou de mise en marche à pleine puissance en fonction de différentes contraintes, par exemple de consommation électrique, de tarif... Le module de contrôle commande le module de correction des températures pour faire exécuter la mise en veille ou la mise en marche à pleine puissance de la machine.

- un module M4 optionnel de gestion de contraintes diverses, permettant par exemple d'invalider le mode de fonctionnement forcé choisi ou de le limiter en temps, afin de conserver l'intégrité de la machine 2. Il s'agit par exemple de veiller à ce que la machine 2 reste dans un mode de fonctionnement autorisé, même en pleine puissance, de tenir compte des alarmes température, ou de s'assurer que la température du liquide de refroidissement de la machine ne descende pas sous une valeur donnée.

Selon l'invention, le module M3 de contrôle permet de gérer deux modes de fonctionnement principaux du dispositif 1 de commande :

- Un mode actif dans lequel le dispositif 1 de commande filtre les valeurs de température mesurées par les capteurs T1, T2 afin d'appliquer des valeurs fictives T1_sim, T2_sim de température sur les entrées in1, in2 de l'unité de contrôle-commande 20 de la machine afin de forcer la mise en veille ou la mise en marche de la machine. Dans ce mode, le module M3 de contrôle doit par exemple s'assurer, auprès du module M4 de gestion des contraintes, de l'application possible du mode actif.

- Un mode passif (comportement transparent du module) dans lequel le dispositif 1 de commande ne filtre pas les valeurs de température mesurées par les capteurs T1, T2 de manière à appliquer les températures réelles sur les entrées in1, in2 de l'unité de contrôle-commande 20 de la machine. En mode passif, le dispositif 1 de commande reste en auto-apprentissage et applique les températures réelles sur les entrées de l'unité de contrôle-commande 20.

Le module M1 de correction des températures est capable de gérer des capteurs analogiques et digitaux. Il est par exemple parfaitement adapté aux capteurs de température T1, T2 de type résistif (la valeur de leur résistance électrique varie selon la température). L'exemple décrit ci-après pour des capteurs analogiques s'applique également pour des capteurs digitaux. Dans cette situation, le module M1 de correction des températures est agencé pour modifier l'impédance appliquée sur l'entrée de l'unité de contrôle-commande de la machine.

En référence à la figure 2, le capteur de température T1 (ou T2) présente une résistance $R\theta$ dont la valeur varie avec la température. Le module M1 de correction des températures vient se connecter en parallèle de ladite résistance $R\theta$ et comporte ainsi :

- deux bornes d'entrée A, B, dites première borne d'entrée et deuxième borne d'entrée, destinées à se connecter aux deux bornes de la résistance $R\theta$ du capteur T1,

- deux bornes de sortie C, D, dites première borne de sortie et deuxième borne de sortie, destinées à se connecter sur l'entrée in1 correspondante de l'unité de contrôle-commande 20 de la machine 2,

- une première résistance Rs connectée d'une part à la première borne d'entrée A et d'autre part à la première borne de sortie C,

- une deuxième résistance Rp connectée d'une part à la première borne de sortie C et d'autre part à la deuxième borne d'entrée B et à la deuxième borne de sortie D,

- une unité de commande 10 reliée au module M3 de contrôle et agencée pour faire varier les valeurs des deux résistances Rs, Rp afin de répondre aux demandes du module M3 de contrôle.

Les deux résistances Rp et Rs variables peuvent par exemple être réalisées à l'aide de photorésistances pilotables.

En déconnectant la deuxième résistance Rp et en augmentant la valeur de la première résistance Rs, le module M1 de correction des températures augmente la valeur de l'impédance appliquée sur l'entrée in1 de l'unité de contrôle-commande 20 de la machine 2.

En shuntant la première résistance Rs et en diminuant la valeur de la résistance de la deuxième résistance Rp, le module M1 de correction des températures diminue la valeur de l'impédance appliquée sur l'entrée in1 de l'unité de contrôle-commande 20 de la machine.

Selon le type de capteur employé, la variation de l'impédance sera interprétée par l'unité de contrôle-commande 20 comme une augmentation ou une diminution de la température mesurée. Par exemple un capteur de température de type PT100 a sa température qui augmente linéairement avec sa résistance $R\theta$. Dans le cas de l'augmentation de la valeur d'impédance sur son entrée in1, l'unité de contrôle-commande 20 croit à une augmentation de la température mesurée. Dans le cas de la diminution de la valeur d'impédance sur son entrée in1, l'unité de contrôle-commande 20 croit à une diminution de la température mesurée.

L'unité de commande 10 du module M1 de correction des températures comporte au moins une première entrée recevant une mesure de la tension Vc entre les deux bornes de sortie C, D du module M1. L'unité de commande 10 ajuste ensuite les valeurs des résistances Rp et Rs pour appliquer l'impédance voulue sur l'entrée in1 de l'unité de contrôle-commande 20 de la machine 2. Lors d'une demande de mise en veille envoyée par le module M3 de contrôle, l'unité de commande 10 du module M1 de correction des températures pilote les deux résistances Rs et Rp de manière à ce que la tension Vc vue en entrée par l'unité de contrôle-commande 20 de la machine soit inférieure à une valeur seuil basse (par exemple 1.02V), représentative de la mise en veille de la machine. Lors d'une demande de mise en marche à pleine puissance envoyée par le module M3 de contrôle, l'unité de commande 10 du module M1 de correction des températures pilote les résistances Rs et Rp de manière à ce que la tension Vc, vue en entrée par l'unité de contrôle-commande 20 de la machine 2, soit supérieure à une valeur seuil haute (par exemple 1.54V), représentative de la mise en marche à pleine puissance de la machine 2.

Le principe de la correction s'exprime par la relation suivante :
Zeq=1/(1/Rp+1/(Rs+Rp)) dans laquelle Zeq représente l'impédance équivalente appliquée par le dispositif 1 de commande pour corriger la résistance $R\theta$ du capteur T1.

De manière optionnelle, l'unité de commande 10 du module de correction des températures peut comporter une deuxième entrée recevant la mesure du courant Ic circulant vers la première borne de sortie. Lorsque la deuxième résistance Rp est déconnectée et la première résistance Rs shuntée, la mesure du courant Ic et de la tension Vc permettent de déterminer la valeur de la résistance $R\theta$ du capteur de température T1. Cette résistance $R\theta$ du capteur de température s'exprime de la manière suivante :

$$R_\theta = R_0(1 + \alpha\theta + \beta\theta^2 + \gamma(\theta - 100)\theta^3)$$

En ajoutant un capteur de température, placé à proximité du capteur de température existant, il est ainsi possible de déterminer les coefficients α, β, γ (par une méthode des moindres carrés) et d'en déduire le type de capteur de température employé.

De manière optionnelle, il est également possible de mesurer le courant It circulant en entrée, sur la première borne d'entrée, et la tension Vt appliquée entre les deux bornes d'entrée A, B. Ces informations supplémentaires envoyées sur des entrées de l'unité de commande 10 du module M1 de correction des températures permettent de déterminer la température réelle mesurée par le capteur de température T1, sans modification par le dispositif 1 de commande de l'invention.

Selon l'invention, le module M2 d'auto-apprentissage récupère les valeurs de température mesurées par les capteurs de températures T1, T2 connectés. A partir de ces valeurs, le module M2 d'auto-apprentissage détermine, pour chaque capteur, la température de mise en veille et de mise en marche à pleine puissance de la machine.

La valeur de la température représentative de la mise en veille de la machine correspond donc à :

T1_sim_stop=T1_min - x℃ (ou -% de la plage de température de fonctionnement)

La valeur de la température représentative de la mise en marche forcée de la machine correspond donc à :

T1_sim_run=T1_max + x℃ (ou +% de la plage de température de fonctionnement)

Dans lesquelles :

- T1_min correspond à la valeur minimale de température mesurée sur une plage de durée donnée,

- T1-max correspond à la valeur maximale de température mesurée sur une plage de durée donnée.

Pour chaque capteur de température T1, T2, le module M2 d'auto-apprentissage détermine la valeur de température de mise en veille et la valeur de température de mise en marche à pleine puissance.

Le dispositif de commande de l'invention présente donc de nombreux avantages, parmi lesquels :

- Il permet d'attribuer à une machine de chauffage, ventilation et climatisation existante et déjà installée une fonction de gestion de son mode de fonctionnement,

- Il s'installe facilement en s'intercalant juste entre les capteurs de température présents et les entrées de la machine,

- Il est compatible avec toute machine existante,

- Il ne nécessite pas de configuration car il intègre un module d'auto-apprentissage,

- Il s'adapte parfaitement aux solutions employant des capteurs de température de type résistif (même si le principe de l'invention pourrait s'adapter à d'autres types de capteurs),

- Son installation n'entraîne pas de modification du programme de régulation de la machine, ni de modification de la partie frigorifique de la machine,

- Il est conforme à la régulation du constructeur de la machine, en ce qu'il permet le maintien de la régulation, des cycles de dégivrage,..

**Revendications**

1. Dispositif (1) de commande pour machine (2) de chauffage, ventilation et climatisation, ladite machine (2) de chauffage, ventilation et climatisation comprenant une unité de contrôle-commande (20) ayant une première entrée (in_Tcons) recevant une valeur de température de consigne, une deuxième entrée (in1, in2) recevant un signal d'entrée et au moins une sortie (out) sur laquelle est appliqué un signal de commande déterminé par l'unité de contrôle-commande (20) en fonction du signal d'entrée et de la valeur de température de consigne, le dispositif de commande comportant :

   - au moins une entrée (in_T1, in_T2) destinée à se connecter à un capteur de température (T1, T2) afin de recevoir du capteur de température au moins une valeur de température mesurée et une sortie destinée à se connecter à la deuxième entrée (in1, in2) de l'unité de contrôle-commande (20), ledit dispositif étant agencé pour déterminer une valeur de température fictive (T1_sim, T2_sim) à appliquer sur la deuxième entrée (in1, in2) de l'unité de contrôle-commande (20) en fonction de la valeur de température mesurée par le capteur de température (T1, T2) afin que l'unité de contrôle-commande (20) de la machine génère un signal de commande forçant le déclenchement d'un mode de fonctionnement particulier de la machine,

   **caractérisé en ce que** le dispositif de commande comporte:

   - un module (M2) d'auto-apprentissage agencé pour déterminer les températures fictives (T1_sim, T2_sim) à appliquer et un module (M1) de correction des températures comprenant des résistances variables (Rs, Rp) dont les valeurs sont ajustées en fonction de la température fictive (T1_sim, T2_sim) à appliquer.

2. Dispositif selon la revendication 1, **caractérisé en ce qu'**il comporte un module (M3) de contrôle agencé pour gérer les demandes de déclenchement d'un mode de fonctionnement particulier de la machine et pour commander le module (M1) de correction des températures.

3. Dispositif selon la revendication 2, **caractérisé en ce que** le module (M1) de correction des températures comporte :

   - deux bornes d'entrée (A, B), dites première borne d'entrée et deuxième borne d'entrée, destinées à se connecter en parallèle du capteur de température (T1, T2),
   - deux bornes de sortie (C, D), dites première borne de sortie et deuxième borne de sortie, destinées à se connecter sur la deuxième entrée (in1, in2) de l'unité de contrôle-commande (20) de la machine (2),
   - une première résistance (Rs) variable connectée d'une part à la première borne d'entrée (A) et d'autre part à la première borne de sortie (C),
   - une deuxième résistance (Rp) variable connectée d'une part à la première borne de sortie (C) et d'autre part à la deuxième borne d'entrée (B) et à la deuxième borne de sortie (D),
   - une unité de commande (10) reliée au module (M3) de contrôle et agencée pour faire varier les valeurs des deux résistances (Rs, Rp) afin de répondre aux demandes de déclenchement provenant du module (M3) de contrôle.

4. Dispositif selon la revendication 2 ou 3, **caractérisé en ce que** le module (M1) de correction des températures comporte des moyens de détermination du type de capteur de température employé.

5. Dispositif selon l'une des revendications 1 à 4, **caractérisé en ce que** le mode de fonctionnement forcé est choisi parmi la mise en veille de la machine (2) et la mise en marche à pleine puissance de la machine (2).

6. Système de chauffage, ventilation et climatisation comprenant :

   - une machine (2) de chauffage, ventilation et climatisation comprenant une unité de contrôle commande (20) ayant une première entrée (in_Tcons) recevant une valeur de température de consigne, une deuxième entrée (in1, in2) recevant un signal d'entrée et au moins une sortie (out) sur laquelle est appliqué un signal de commande déterminé par l'unité de contrôle-commande (20) en fonction du signal d'entrée et de la valeur de température de consigne,
   - au moins un capteur de température destiné à mesurer une température,

   **caractérisé en ce qu'**il comporte :

- un dispositif (1) de commande tel que défini dans l'une des revendications 1 à 5, une entrée (in_T1, in_T2) dudit dispositif étant connectée au capteur de température afin de recevoir du capteur de température au moins une valeur de température mesurée et une sortie dudit dispositif connectée à la deuxième entrée (in1, in2) de l'unité de contrôle-commande (20), ledit dispositif (1) de commande étant agencé pour déterminer une valeur de température fictive (T1_sim, T2_sim) à appliquer sur la deuxième entrée (in1, in2) de l'unité de contrôle-commande (20) en fonction de la valeur de température mesurée par le capteur de température (T1, T2) afin que l'unité de contrôle-commande (20) de la machine génère un signal de commande forçant le déclenchement d'un mode de fonctionnement particulier de la machine.

**Patentansprüche**

1. Betätigungsvorrichtung (1) für eine Heiz-, Belüftungs- und Klimaanlagenmaschine (2), wobei die Heiz-, Belüftungs- und Klimaanlagenmaschine (2) eine Kontroll-Steuereinheit (20) mit einem ersten Eingang (in_Tcons), der einen Solltemperaturwert empfängt, einem zweiten Eingang (in1, in2), der ein Eingangssignal empfängt, und mindestens einem Ausgang (out) umfasst, an dem ein Steuersignal angewandt wird, das von der Kontroll-Steuereinheit (20) in Abhängigkeit vom Eingangssignal und vom Solltemperaturwert bestimmt wird, wobei die Betätigungsvorrichtung umfasst:

   - mindestens einen Eingang (in_T1, in_T2), der dazu bestimmt ist, sich an einen Temperatursensor (T1, T2) anzuschließen, um von dem Temperatursensor mindestens einen gemessenen Temperaturwert zu empfangen, und einen Ausgang, der dazu bestimmt ist, sich an den zweiten Eingang (in1, in2) der Kontroll-Steuereinheit (20) anzuschließen, wobei die Vorrichtung dazu vorgesehen ist, einen fiktiven Temperaturwert (T1_sim, T2_sim) zu bestimmen, der an dem zweiten Eingang (in1, in2) der Kontroll-Steuereinheit (20) in Abhängigkeit von dem vom Temperatursensor (T1, T2) gemessenen Temperaturwert anzuwenden ist, so dass die Kontroll-Steuereinheit (20) der Maschine ein Steuersignal erzeugt, das die Auslösung eines besonderen Betriebsmodus der Maschine forciert,

   **dadurch gekennzeichnet, dass** die Betätigungsvorrichtung umfasst:

   - ein Selbstlernmodul (M2), das dazu vorgesehen ist, die fiktiven Temperaturen (T1_sim, T2_sim), die anzuwenden sind, zu bestimmen, und ein Korrekturmodul (M1) der Temperaturen, umfassend variable Widerstände (Rs, Rp), deren Werte in Abhängigkeit von der anzuwendenden fiktivenTemperatur (T1_sim, T2_sim) angepasst werden.

2. Vorrichtung nach Anspruch 1, **dadurch gekennzeichnet, dass** sie ein Kontrollmodul (M3) umfasst, das dazu vorgesehen ist, die Auslösebefehle eines besonderen Betriebsmodus der Maschine zu verwalten und das Korrekturmodul (M1) der Temperaturen zu steuern.

3. Vorrichtung nach Anspruch 2, **dadurch gekennzeichnet, dass** das Korrekturmodul (M1) der Temperaturen umfasst:

   - zwei Eingangsklemmen (A, B), erste Eingangsklemme und zweite Eingangsklemme genannt, die dazu bestimmt sind, sich parallel an den Temperatursensor (T1, T2) anzuschließen;
   - zwei Ausgangsklemmen (C, D), erste Ausgangsklemme und zweite Ausgangsklemme genannt, die dazu bestimmt sind, sich an den zweiten Eingang (in1, in2) der Kontroll-Steuereinheit (20) der Maschine (2) anzuschließen,
   - einen ersten variablen Widerstand (Rs), der einerseits an die erste Eingangsklemme (A) und andererseits an die erste Ausgangsklemme (C) angeschlossen ist,
   - einen zweiten variablen Widerstand (Rp), der einerseits an die erste Ausgangsklemme (C) und andererseits an die zweite Eingangsklemme (B) und an die zweite Ausgangsklemme (D) angeschlossen ist,
   - eine Steuereinheit (10), die mit dem Kontrollmodul (M3) verbunden und dazu vorgesehen ist, die Werte der zwei Widerstände (Rs, Rp) zu variieren, um den Auslösebefehlen, die vom Kontrollmodul (M3) kommen, zu entsprechen.

4. Vorrichtung nach Anspruch 2 oder 3, **dadurch gekennzeichnet, dass** das Korrekturmodul (M1) der Temperaturen Mittel zur Bestimmung des verwendeten Temperatursensortyps umfasst.

5. Vorrichtung nach einem der Ansprüche 1 bis 4, **dadurch gekennzeichnet, dass** der forcierte Betriebsmodus unter dem Standby-Modus der Maschine (2) und dem Einschalten der Maschine (2) auf volle Leistung ausgewählt ist.

6. Heiz-, Belüftungs- und Klimaanlagensystem, umfassend:

   - eine Heiz-, Belüftungs- und Klimaanlagenmaschine (2), umfassend eine Kontroll-Steuereinheit (20) mit einem ersten Eingang (in_Tcons), der einen Solltemperaturwert empfängt, einem zweiten Eingang (in1, in2), der ein Eingangssignal empfängt, und mindestens einem Ausgang (out), an dem ein Steuersignal angewandt wird, das von der Kontroll-Steuereinheit (20) in Abhängigkeit vom Eingangssignal und vom Solltemperaturwert bestimmt wird,
   - mindestens einen Temperatursensor, der dazu bestimmt ist, eine Temperatur zu messen,

   **dadurch gekennzeichnet, dass** es umfasst:

   - eine Steuervorrichtung (1), wie in einem der Ansprüche 1 bis 5 definiert, wobei ein Eingang (in_T1, in_T2) der Vorrichtung an den Temperatursensor angeschlossen ist, um von dem Temperatursensor mindestens einen gemessenen Temperaturwert zu empfangen, und ein Ausgang der Vorrichtung an den zweiten Eingang (in1, in2) der Kontroll-Steuereinheit (20) angeschlossen ist, wobei die Steuervorrichtung (1) dazu vorgesehen ist, einen fiktiven Temperaturwert (T1_sim, T2_sim) zu bestimmen, der an dem zweiten Eingang (in1, in2) der Kontroll-Steuereinheit (20) in Abhängigkeit von dem vom Temperatursensor (T1, T2) gemessenen Temperaturwert anzuwenden ist, so dass die Kontroll-Steuereinheit (20) der Maschine ein Steuersignal erzeugt, das die Auslösung eines besonderen Betriebsmodus der Maschine forciert.

**Claims**

1. Control device (1) for heating, ventilation and air-conditioning machine (2), said heating, ventilation and air-conditioning machine (2) comprising a monitoring-control unit (20) having a first input (in_Tcons) receiving a setpoint temperature value, a second input (in1, in2) receiving an input signal and at least one output (out), applied to which is a control signal determined by the monitoring-control unit (20) according to the input signal and the setpoint temperature value, the control device including:

   - at least one input (in_T1, in_T2) intended to be connected to a temperature sensor (T1, T2) in order to receive, from the temperature sensor, at least one measured temperature value and an output intended to be connected to the second input (in1, in2) of the monitoring-control unit (20), said device being arranged to determine an imaginary temperature value (T1_sim, T2_sim) to be applied to the second input (in1, in2) of the monitoring-control unit (20) according to the temperatures value measured by the temperature sensor (T1, T2) so that the monitoring-control unit (20) of the machine generates a control signal forcing a particular operating mode of the machine to be triggered,

   **characterized in that** the control device includes:

   - a self-learning module (M2) arranged to determine the imaginary temperatures (T1_sim, T2_sim) to be applied and a module (M1) for correcting the temperatures comprising variable resistors (Rs, Rp), the values of which are adjusted according to the imaginary temperature (T1_sim, T2_sim) to be applied.

2. Device according to Claim 1, **characterized in that** includes a monitoring module (M3) arranged to manage the requests to trigger a particular operating mode of the machine and to control the module (M1) for correcting the temperatures.

3. Device according to Claim 2, **characterized in that** the module (M1) for correcting the temperatures includes:

   - two input terminals (A, B), referred to as the first input terminal and the second input terminal, that are intended to be connected in parallel to the temperature sensor (T1, T2);
   - two output terminals (C, D), referred to as the first output terminal and the second otuput terminal, that are intended to be connected to the second input (in1, in2) of the monitoring-control unit (20) of the machine (2);
   - a first variable resistor (Rs) connected both to the first input terminal (A) and to the first output terminal (C);
   - a second variable resistor (Rp) connected both to the first output terminal (C) and to the second input terminal (B) and to the second output terminal (D);

- a control unit (10) connected to the monitoring module (M3) and arranged to vary the values of the two resistors (Rs, Rp) so as to meet the triggering requests from the monitoring module (M3).

4. Device according to Claim 2 or 3, **characterized in that** the module (M1) for correcting the temperatures includes means for determining the type of temperature sensor employed.

5. Device according to one of Claims 1 to 4, **characterized in that** the forced operating mode is chosen from putting the machine (2) on standby and putting the machine (2) into full-power operation.

6. Heating, ventilation and air-conditioning system comprising:

- a heating, ventilation and air-conditioning machine (2) comprising a monitoring-control unit (20) having a first input (in_Tcons) receiving a setpoint temperature value, a second input (in1, in2) receiving an input signal and at least one output (out), applied to which is a control signal determined by the monitoring-control unit (20) according to the input signal and the setpoint temperature value;
- at least one temperature sensor intended to measure a temperature,

**characterized in that** it includes:

- a control device (1) such as defined in one of Claims 1 to 5, one input (in_T1, in_T2) of said control device being connected to a temperature sensor in order to receive, from the temperature sensor, at least one measured temperature value and an output of said control device being connected to the second input (in1, in2) of the monitoring-control unit (20), said device being arranged to determine an imaginary temperature value (T1_sim, T2_sim) to be applied to the second input (in1, in2) of the monitoring-control unit (20) according to the temperature value measured by the temperature sensor (T1, T2) so that the monitoring-control unit (20) of the machine generates a control signal forcing a particular operating mode of the machine to be triggered.

**Fig. 1**

**Fig. 2**

**EP 2 979 146 B1**

## RÉFÉRENCES CITÉES DANS LA DESCRIPTION

**Documents brevets cités dans la description**

- US 2004016817 A1
- US 2012273581 A1